# EUROPEAN PATENT APPLICATION

(11) **EP 1 747 910 A2**
(43) Date of publication of application: **31.01.2007**
(21) Application number: 06380081.7
(22) Date of filing: 11.04.2006
(51) Int. Cl.: B60B 1/00, F16D 65/847

(54) **Improvement in vehicle wheels to incorporate a fan effect**

(30) Priority: 28.07.2005 ES 200501794 U
(71) Applicant: Rubio Caro, Carlos José, 41700 Dos Hermanas-Sevilla (ES)
(72) Inventor: Rubio Caro, Carlos José, 41700 Dos Hermanas-Sevilla (ES)
(74) Representative: Gil-Vega, Victor

(57) **Abstract**

The invention consists of conceiving the wheel spokes as turbine blades (2) that with the natural movement of the vehicle will cause an air flow that can suck away the heat produced by the disc brakes and the engine or, alternatively according to the orientation of the blades, introduce an axial flow of air from the exterior that cools the disc brakes and the engine.

## Description

### FIELD OF THE INVENTION

The present description refers to a wheel provided with spokes in such a configuration that the natural movement of the vehicle generates an air current favouring the cooling of the brake discs and / or the engine.

This invention has its field of application in the automotive industry.

### BACKGROUND OF THE INVENTION

Reviewing the state of the art in this topic, different solutions have been contributed over time in the design, development and manufacture of wheels for conventional cars.

The current wheels whether of steel, aluminium, titanium or magnesium are composed of a part which houses the tyre, known as the "rim", and one that contains the orifices that house the fixing bolts that secure the wheel to the axle casing of the automobile. Thus, in the case of steel wheels, this latter part is made from a circular plate with some orifices around it to give an aesthetic aspect in addition to those corresponding to the fixing bolts.

On the other hand, in aluminium, titanium or magnesium wheels, this plate is replaced with spokes made of the same material; the designs are more sophisticated although normally they fulfil merely aesthetic functions, in addition to structural requirements and the advantages of reducing weight.

Thus, the present invention consists of conceiving the wheel spokes as turbine blades that with the natural movement of the vehicle will cause an air flow that can suck away the heat produced by the disc brakes and the engine or, alternatively according to the orientation of the blades, introduce an axial flow of air from the exterior that cools the disc brakes and the engine, contributing the following advantages with regard to the state of the art:
- In its application to sports and competition vehicles (Formula 1, for example), the cooling of disk brakes.
- In its application to conventional cars when driven on mountain roads or roads with many curves where the brakes are used more frequently.
- Incorporating a few ventilation spaces, allows the cooling of the engine of any type of vehicle.
- Simplicity of manufacture against the improvement obtained.

### DESCRIPTION OF THE INVENTION

The present invention relates to a wheel formed by a central plate, some blade shaped spokes and the exterior disc, or rim, on whose exterior surface the tyre is mounted.

Thus, the blades in the wheel, the object of the present invention, provide a uniting element between the central plate and the rim, whereas the number of them, their form and disposition determine, bearing in mind the structural function that the blades perform in the configuration of the wheel, the optimization of the cooling generated against the aerodynamic resistance presented to the movement of the vehicle.

Nevertheless, it has to be born in mind that the cooling flow generated in two wheels of each side is inwards or outwards from the vehicle, as has been considered, and it is necessary that the wheels on each side incorporate blades in equal number, form and disposition, with the exception of their angle of the blades, which has to be complementary to reverse the direction of the generated axial flow.

In order to present an embodiment of the invention, the following diagrams represent in a practical way the achievement of the described invention.
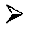 Figure (1): Main view.
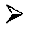 Figure (2): Perspective view of the blade.
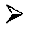 Figure (3): Perspective view of the blades in wheels on the side opposite to the previous.

In these diagrams, the numbered elements relate to the following:
(1): Central plate
(2): Spokes in the form of blades
(3): Disc or rim, on whose exterior surface the tyre is
mounted.

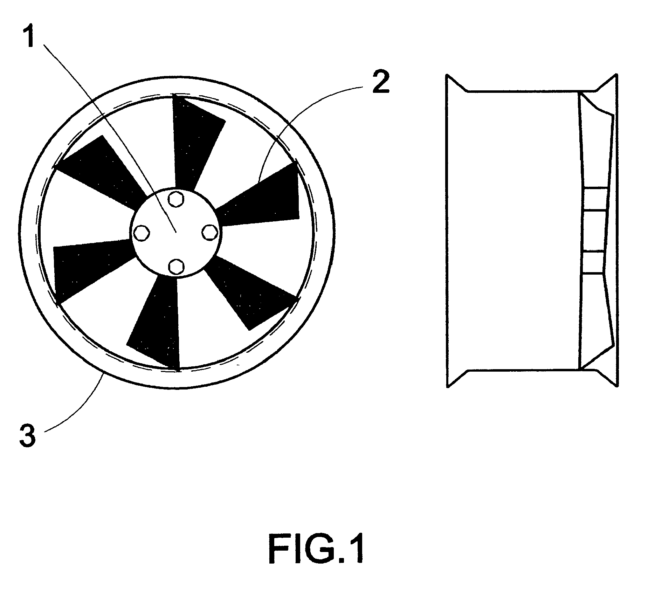

Figure 1 shows an example of the preferred embodiment of the invention applied on the wheel of a conventional car which will produce brake cooling by generating an air flow with its natural movement, consisting of four wheels, each one formed by a central plate (1), four spokes in blade form (2) and an exterior disc or rim, on whose exterior surface the tyre is mounted.

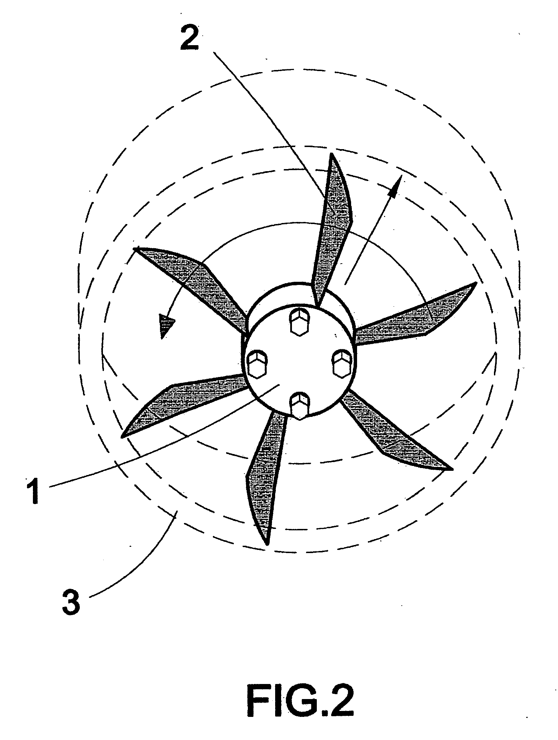

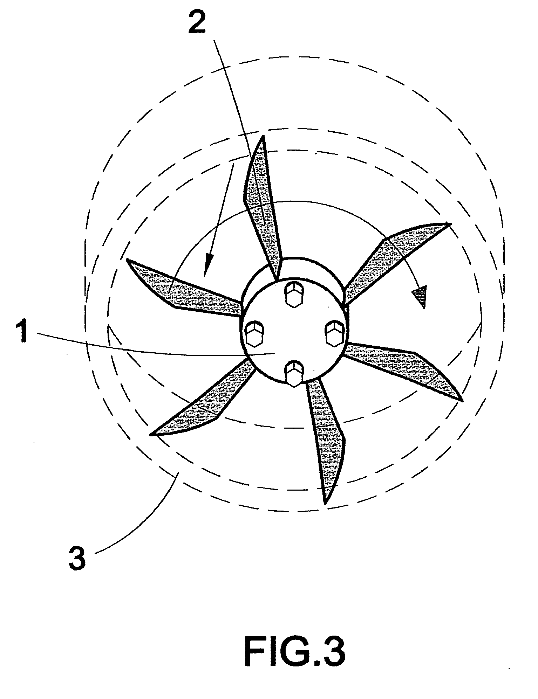

The four wheels have identical configuration, except that the angle of inclination of the blades (2) of the wheels of one side are complementary to those on the other side (Figures 2 and 3).

Both the diameter of the wheels and the width of its rim (3) can be presented in the market, for example, from 13, 14, 15, 16, 17, 18, 19, 20 inches from now on, whereas the fixing bolts can correspond to 4 or 5 orifices or to the special ones used in competition.

Locating blades (2) as shown in Figure 2 on the driver's side wheels and vice versa with regard to the blades of Figure 3, an axial flow is obtained towards the interior of the vehicle. To obtain the opposite effect it is only necessary to arrange the blades in the opposite configuration to that described.

Alternatively, the vehicle can incorporate some vents in the hubcap of the wheel to facilitate the conduction of the generated air current towards the engine compartment.

It is not considered necessary to make this description more extensive so that any expert in the matter understands the scope of the invention and the advantages that stem from it. The materials, form, size, number and disposition of the elements that are described will be susceptible to variation as long as it does not suppose an alteration in the essence of the invention.

## Claims

1. Improvement in vehicle wheels to incorporate a fan effect **characterized by** spokes in the shape of blades (2), radiating out from a central plate (1), and the exterior disc or rim (3), on whose exterior surface the tyre is mounted.

2. Improvement in vehicle wheels to incorporate a fan effect according to claim 1 **characterized** because its spokes in the form of blades (2) are uniting elements between the central plate (1) and the rim (3) of the wheel.

3. Improvement in vehicle wheels to incorporate a fan effect according to claim 1 and 2 **characterized** because, alternatively, the vehicle can incorporate some vents in the hubcap of the wheel to facilitates the conduction of the generated air current towards the engine compartment.
